# EUROPEAN PATENT SPECIFICATION

(11) **EP 3 739 508 B1**
(45) Date of publication and mention of the grant of the patent: **16.02.2022**
(21) Application number: 19886055.3
(22) Date of filing: 21.03.2019
(51) Int. Cl.: G06K 9/00, H04M 1/02, G06F 1/16, G06F 3/041, G06F 21/32

(54) **FINGERPRINT IDENTIFICATION APPARATUS AND ELECTRONIC DEVICE**
VORRICHTUNG ZUR FINGERABDRUCKIDENTIFIZIERUNG UND ELEKTRONISCHE VORRICHTUNG
APPAREIL D'IDENTIFICATION D'EMPREINTES DIGITALES ET DISPOSITIF ÉLECTRONIQUE

(43) Date of publication of application: 18.11.2020
(73) Proprietor: SHENZHEN GOODIX TECHNOLOGY CO., LTD., Shenzhen, Guangdong 518045 (CN)
(72) Inventor: LIU, Kai, Shenzhen, Guangdong 518045 (CN); LONG, Wei, Shenzhen, Guangdong 518045 (CN); GUO, Yiping, Shenzhen, Guangdong 518045 (CN)
(74) Representative: Pfenning, Meinig & Partner mbB
(86) International application number: PCT/CN2019/079107
(87) International publication number: WO 2020/186523

(56) References cited:
- EP-A1- 3 328 039
- CN-A- 107 330 426
- CN-A- 108 323 207
- CN-U- 208 027 381
- CN-U- 208 283 964
- CN-U- 208 607 675
- US-A1- 2008 273 771
- US-A1- 2017 300 736

## Description

### TECHNICAL FIELD

Embodiments of the present application relate to the electronic field, and more particularly, to a fingerprint identification apparatus and an electronic device.

### BACKGROUND

At present, an under-screen fingerprint identification solution is to attach an optical fingerprint identification module or an ultrasonic fingerprint identification module to the bottom of an organic light-emitting diode (OLED) screen, that is, either the optical fingerprint identification module or the ultrasonic fingerprint identification module is required to be closely adhered to a light-emitting layer of the bottom of a screen.

However, since the OLED screen is costly and fragile, the OLED screen is easily damaged when the fingerprint identification module is directly attached to the OLED screen. In addition, since the fingerprint identification module and the OLED screen are completely adhered, if the fingerprint identification module is damaged, the OLED screen is easily damaged when the fingerprint identification module is disassembled. Moreover, an attaching process of directly attaching the fingerprint identification module to the OLED screen is also relatively complicated.

Due to the above problems, costs and complexity of an electronic device are greatly increased, and maintainability is low.

CN208283964U discloses optical fingerprint module. The optical fingerprint module includes: a supporting bottom plate, and a flexible circuit board disposed on an edge region of the first surface of the supporting bottom plate and a chip disposed in a central region of the first surface, the central region An area on the first surface other than the edge region; wherein the flexible circuit board is electrically connected to the chip. With the solution, since the flexible circuit board and the chip are respectively disposed on the edge and the central area of the first surface of the support bottom plate, compared with the prior art, the flexible circuit board is disposed on the support bottom plate, and the chip is disposed on the flexible circuit board. The thickness of the optical fingerprint module can be reduced, thereby solving the problem in the prior art that the thickness of the whole machine is large due to the thick thickness of the optical fingerprint module.

US2017/300736A1 discloses an electronic device. The electronic device a display in which a fingerprint recognition area is formed in at least one portion thereof; a fingerprint sensor disposed under the display on which a screen is displayed, wherein the fingerprint sensor is adapted to acquire image information related to authentication of a fingerprint corresponding to an object that approaches a fingerprint recognition area at least partially based on light radiated from at least one pixel of the display and reflected by the object; and a processor adapted to control at least one function of the fingerprint sensor in association with the operation of acquiring the image information.

### SUMMARY

The invention is set out in the appended set of claims.

### BRIEF DESCRIPTION OF THE DRAWINGS

FIG. 1 is a schematic plan view of an electronic device to which the present application is applicable.
FIG. 2 is a schematic side cross-sectional view of the electronic device shown in FIG. 1.
FIGS. 3 to 7 are schematic structural diagrams of a fingerprint identification apparatus according to an embodiment of the present application.
FIG. 8 is a schematic structural diagram formed after a fingerprint identification apparatus is mounted to a middle frame of an electronic device according to an embodiment of the present application.
FIG. 9 is a schematic structural diagram formed by mounting the structure shown in FIG. 8 to a display screen of an electronic device.

### DESCRIPTION OF EMBODIMENTS

Technical solutions in embodiments of the present application will be described hereinafter with reference to the accompanying drawings.

The technical solutions of the embodiments of the present application may be applied to various electronic devices.

For example, portable or mobile computing devices such as smartphones, laptops, tablets and gaming devices, and other electronic devices such as electronic databases, automobiles and bank automated teller machines (ATM), which are not limited in the embodiments of the present application.

The technical solutions of the embodiments of the present application may be applied to a biometric identification technology. The biometric identification technology includes, but is not limited to, identification technologies, such as fingerprint identification, palm print identification, iris identification, human face identification and living body identification. For convenience of illustration, a fingerprint identification technology is described below as an example.

The technical solutions of the embodiments of the present application may be used for an under-screen fingerprint identification technology and an in-screen fingerprint identification technology.

The under-screen fingerprint identification technology refers to mounting a fingerprint identification module under a display screen, so as to realize a fingerprint identification operation in a display region of the display screen without setting a fingerprint capturing region in a region other than the display region on a front face of an electronic device. Specifically, the fingerprint identification module uses light returned from a top surface of a display component of the electronic device for fingerprint sensing and other sensing operations. This returned light carries information about an object (for example, a finger) that is in contact with the top surface of the display component, and the fingerprint identification module located under the display component implements under-screen fingerprint identification by capturing and detecting this returned light. The fingerprint identification module may be designed to achieve desired optical imaging by properly configuring an optical element for capturing and detecting returned light.

Correspondingly, the in-screen (In-display) fingerprint identification technology refers to mounting a fingerprint identification module or a part of a fingerprint identification module inside a display screen, so as to realize a fingerprint identification operation in a display region of the display screen without setting a fingerprint capturing region in a region other than the display region on a front face of an electronic device.

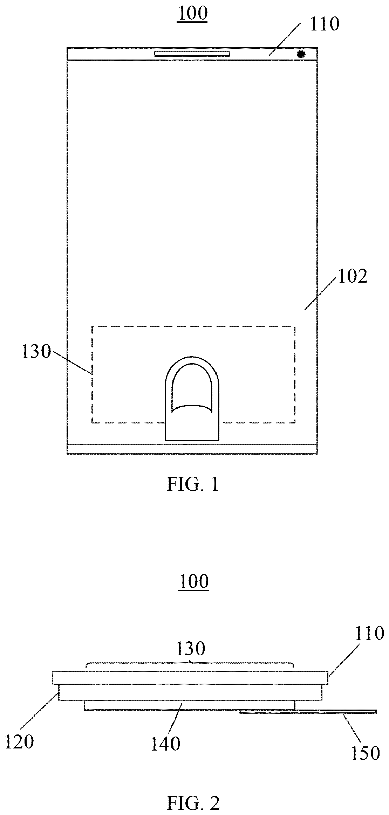

FIGS. 1 and 2 are schematic views showing an electronic device 100 applicable to an under-screen fingerprint identification technology. FIG. 1 is a schematic front view of an electronic device 100, and FIG. 2 is a schematic partial cross-sectional structural view of the electronic device 100 shown in FIG. 1.

As shown in FIG. 1 and FIG. 2, the electronic device 100 may include a display screen 120 and a fingerprint identification module 140.

The display screen 120 may be a self-light-emitting display screen that adopts a self-light-emitting display unit as a display pixel. For example, the display screen 120 may be an organic light-emitting diode (OLED) display screen or a micro light-emitting diode (micro-LED) display screen. In other alternative embodiments, the display screen 120 may also be a liquid crystal display (LCD) screen or another passive light-emitting display screen, which is not limited in the embodiments of the present application.

In addition, the display screen 120 may specifically be a touch display screen, which may not only display an image, but also detect a touch or press operation of a user, thereby providing the user with a human-machine interaction interface. For example, in an embodiment, the electronic device 100 may include a touch sensor, and the touch sensor may specifically be a touch panel (TP), which may be disposed on a surface of the display screen 120, or may be partially integrated or entirely integrated into an interior of the display screen 120 to form the touch display screen.

The fingerprint identification module 140 may be an optical fingerprint identification module, for example, an optical fingerprint sensor.

Specifically, the fingerprint identification module 140 of the invention as claimed includes a fingerprint sensor chip (hereinafter also referred to as an optical fingerprint sensor) having an optical sensing array. The optical sensing array includes a plurality of optical sensing units, and each of the optical sensing units may specifically include a photo detector or a photoelectric sensor. In other words, the fingerprint identification module 140 may include a photo detector array (or referred to as a photoelectric detector array, a photoelectric sensor array) including a plurality of photo detectors distributed in an array.

As shown in FIG. 1, the fingerprint identification module 140 may be disposed in a partial region under the display screen 120 such that a fingerprint capturing region (or detecting region) 130 of the fingerprint identification module 140 is at least partially located in a display region 102 of the display screen 120.

Certainly, in other alternative embodiments, the fingerprint identification module 140 may also be disposed at another position, such as a side of the display screen 120 or a non-light-transmitting region of an edge of the electronic device 100. In this case, an optical signal from at least part of the display region of the display screen 120 may be guided to the fingerprint identification module 140 by using an optical path design, so that the fingerprint capturing region 130 is actually located in the display region of the display screen 120.

In some embodiments of the present application, the fingerprint identification module 140 may include only one fingerprint sensor chip, and in this case, the fingerprint capturing region 130 of the fingerprint identification module 140 has a smaller area and a fixed position, therefore, when performing fingerprint inputting, a user needs to press a finger at a specific position of the fingerprint capturing region 130, otherwise the fingerprint identification module 140 may not be able to capture a fingerprint image, thereby resulting in poor user experience.

In other embodiments of the present application, the fingerprint identification module 140 may specifically include a plurality of fingerprint sensor chips; and the plurality of fingerprint sensor chips may be disposed under the display screen 120 side by side by means of splicing, and sensing regions of the plurality of fingerprint sensor chips collectively form the fingerprint capturing region 130 of the fingerprint identification module 140. That is, the fingerprint capturing region 130 of the fingerprint identification module 140 may include a plurality of sub-regions, and each sub-region corresponds to a sensing region of one of the fingerprint sensor chips, so that the fingerprint capturing region 130 of the fingerprint identification module 140 may be extended to a main region of a lower half of the display screen, that is, it is extended to a region against which the finger is usually pressed, thereby achieving a blind pressing type of a fingerprint input operation. Alternatively, when the number of the fingerprint sensor chips is sufficient, the fingerprint detecting region 130 may also be extended to a half of the display region or even the entire display region, thereby achieving half-screen or full-screen fingerprint detection.

It should be understood that the specific form of the plurality of fingerprint sensor chips is not limited in the embodiment of the present application.

For example, the plurality of fingerprint sensor chips may be respectively fingerprint sensor die encapsulated individually, or may be a plurality of dies encapsulated in a same chip capsule.

For another example, the plurality of fingerprint sensor chips may also be fabricated and formed in different regions of a same die by a semiconductor process.

As shown in FIG. 2, a region where the optical sensing array of the fingerprint identification module 140 is located or a light sensing range of the optical sensing array of the fingerprint identification module 140 corresponds to the fingerprint capturing region 130 of the fingerprint identification module 140. An area of the fingerprint capturing region 130 of the fingerprint identification module 140 may be equal to or not equal to an area of the region where the optical sensing array of the fingerprint identification module 140 is located or the optical sensing range of the optical sensing array of the fingerprint identification module 140, which is not specifically limited in the embodiment of the present application.

For example, by an optical path design of light collimation, the area of the fingerprint capturing region 130 of the fingerprint identification module 140 may be designed to be substantially consistent with an area of the sensing array of the fingerprint identification module 140.

For another example, by an optical path design of converging light or an optical path design of reflecting light, the area of the fingerprint capturing region 130 of the fingerprint identification module 140 may be larger than an area of the sensing array of the fingerprint identification module 140.

An optical path design of the fingerprint identification module 140 is exemplarily described below.

In an example that the optical path design of the fingerprint identification module 140 adopts an optical collimator having an array of through holes with a high aspect ratio, the optical collimator may specifically be a collimator layer fabricated on a semiconductor silicon wafer, which has a plurality of collimating units or micro-holes, and a collimating unit may specifically be a small hole. Light in reflected light reflected back from a finger that is vertically incident to the collimating unit may pass through the collimating unit and be received by a fingerprint sensor chip under the collimating unit. However, light with an excessive large incident angle is attenuated through multiple reflection inside the collimating unit, therefore, each fingerprint sensor chip may basically only receive reflected light reflected back from a fingerprint pattern right above the fingerprint sensor chip, which could effectively improve image resolution and then improve a fingerprint identification effect.

Further, when the fingerprint identification module 140 includes a plurality of fingerprint sensor chips, one collimating unit may be configured for one optical sensing unit in an optical sensing array of each fingerprint sensor chip, and is disposed above a corresponding optical sensing unit by means of attachment. Certainly, the plurality of optical sensing units may also share one collimating unit, that is, the one collimating unit has a sufficiently large aperture to cover the plurality of optical sensing units. Since one collimating unit may correspond to the plurality of optical sensing units and a correspondence between a spatial period of the display screen 120 and a spatial period of the fingerprint sensor chips is broken, even if a spatial structure of a light-emitting display array of the display screen 120 and a spatial structure of the optical sensing array of the fingerprint sensor chip are similar, it could be effectively avoided that the fingerprint identification module 140 uses an optical signal passing through the display screen 120 to perform fingerprint imaging to generate Moire fringes, and the fingerprint identification effect of the fingerprint identification module 140 is effectively improved.

In an example that the optical path design of the fingerprint identification module 140 adopts an optical path design of an optical lens, the optical lens may include an optical lens layer having one or more lens units, for example, a lens group composed of one or more aspheric lenses, for converging reflected light reflected back from a finger to a sensing array of a fingerprint sensor chip under the optical lens layer, so that the sensing array may perform imaging based on the reflected light so as to obtain a fingerprint image of the finger. The optical lens layer may further be provided with a pinhole in an optical path of the lens unit, and the pinhole may cooperate with the optical lens layer to expand the field of view of the fingerprint identification module 140 to improve the fingerprint imaging effect of the fingerprint identification module 140.

Further, when the fingerprint identification module 140 includes a plurality of fingerprint sensor chips, one optical lens may be configured for each of the fingerprint sensor chips for fingerprint imaging, or one optical lens may be configured for the plurality of fingerprint sensor chips to realize light convergence and fingerprint imaging. Even when one fingerprint sensor chip has dual sensing arrays (Dual-Array) or multiple sensing arrays (Multi-Array), two or more optical lenses may be configured for this fingerprint sensor chip to cooperate with the dual sensing arrays or the multiple sensing arrays for optical imaging, so as to reduce an imaging distance and enhance the imaging effect.

In an example that the optical path design of the fingerprint identification module 140 adopts an optical path design of a micro-lens layer, the micro-lens layer may have a micro-lens array formed by a plurality of micro-lenses, which may be provided above a sensing array of the fingerprint sensor chip by a semiconductor growth process or other processes, and each micro-lens may correspond to one of sensing units in the sensing array. Another optical film layer such as a medium layer or a passivation layer may be formed between the micro-lens layer and the sensing units, and more specifically, a light blocking layer having a micro-hole may also be provided between the micro-lens layer and the sensing units, where the micro-hole is formed between a corresponding micro-lens and a corresponding sensing unit, and the light blocking layer may block optical interference between adjacent micro-lenses and the sensing units such that light is converged to an interior of the micro-hole through the micro-lens and transmitted to a sensing unit corresponding to the micro-lens via the micro-hole for optical fingerprint imaging.

It should be understood that the several implementations of the foregoing optical path directing structure may be used alone or in combination, for example, a micro-lens layer may be further disposed under the collimator layer or the optical lens layer. Certainly, when the collimator layer or the optical lens layer is used in combination with the micro-lens layer, the specific laminated structure or optical path may require to be adjusted according to actual needs.

The fingerprint identification module 140 may be used for capturing fingerprint information (such as fingerprint image information) of a user.

In an example that the display screen 120 adopts an OLED display screen, the display screen 120 may adopt a display screen with a self-light-emitting display unit, for example, an organic light-emitting diode (OLED) display screen or a micro light-emitting diode (Micro-LED) display screen. The fingerprint identification module 140 may use a display unit (that is, an OLED light source) of the OLED display screen that is located in the fingerprint capturing region 130 as an excitation light source for optical fingerprint detection.

When a finger touches, is pressed against or approaches (collectively referred to as pressing for convenience of description) the fingerprint capturing region 130, the display screen 120 emits a beam of light to a finger above the fingerprint capturing region 130, and the beam of light is reflected by a surface of the finger to form reflected light or is scattered inside the finger to form scattered light. In related patent applications, the foregoing reflected light and scattered light are collectively referred to as reflected light for convenience of description. Since a ridge and a valley of a fingerprint have different light reflecting capabilities, reflected light from the ridge of the fingerprint and reflected light from the valley of the fingerprint have different light intensities. After passing through the display screen 120, the reflected light is received by the fingerprint sensor chip in the fingerprint identification module 140 and converted into a corresponding electrical signal, that is, a fingerprint detecting signal; and fingerprint image data may be obtained based on the fingerprint detecting signal, and fingerprint matching verification may be further performed, thereby implementing an optical fingerprint identification function at the electronic device 100.

Therefore, when a user needs to perform fingerprint unlocking or other fingerprint verification on the electronic device 100, an input operation of fingerprint characteristics can be implemented merely by pressing a finger on the fingerprint capturing region 130 in the display screen 120. Since capturing of the fingerprint characteristics can be implemented inside the display region 102 of the display screen 120, a front face of the electronic device 100 in the above structure does not need to specially reserve space to set a fingerprint button (such as a Home button), so that it is possible that a full screen solution can be adopted. Therefore, the display region 102 of the display screen 120 could be substantially extended to the whole front face of the electronic device 100.

Certainly, in other alternative solutions, the fingerprint identification module 140 may also provide an optical signal for fingerprint detection and identification by adopting an internal light source or an external light source. In this case, the fingerprint identification module 140 can not only apply to a self-light-emitting display screen such as an OLED display screen, but also apply to a non-self-light-emitting display screen such as a liquid crystal display screen or another passive light-emitting display screen.

In an example of a liquid crystal display screen having a backlight module and a liquid crystal panel, in order to support under-screen fingerprint detection of the liquid crystal display screen, an optical fingerprint system of the electronic device 100 may further include an excitation light source for optical fingerprint detection. The excitation light source may specifically be an infrared light source or a light source of non-visible light at a specific wavelength, which may be disposed under the backlight module of the liquid crystal display screen or disposed in an edge region under a protective cover of the electronic device 100. The fingerprint identification module 140 may be disposed under the liquid crystal panel or the edge region of the protective cover, and by being directed over an optical path, light for fingerprint detection may reach the fingerprint identification module 140. Alternatively, the fingerprint identification module 140 may also be disposed under the backlight module, and the backlight module allows the light for fingerprint detection to pass through the liquid crystal panel and the backlight module and reach the fingerprint identification module 140 by providing a hole on film layers such as a diffusion sheet, a brightening sheet, a reflection sheet or the like, or by performing other optical designs. When the fingerprint identification module 140 provides an optical signal for fingerprint detection by adopting an internal light source or an external light source, a detection principle may be the same.

As shown in FIG. 1, the electronic device 100 may further include a protective cover 110.

The cover 110 may specifically be a transparent cover such as a glass cover or a sapphire cover which is located on the display screen 120 and covers a front face of the electronic device 100, and a surface of the cover 110 may also be provided with a protective layer. Therefore, in an embodiment of the present application, the so-called finger being pressed against the display screen 120 may actually refer to the finger being pressed against the cover 110 on the display screen 120 or a surface of the protective layer covering the cover 110.

As shown in FIG. 2, a circuit board 150 such as a flexible circuit board (FPC) may also be disposed under the fingerprint identification module 140.

The fingerprint identification module 140 may be soldered to the circuit board 150 through a pad, and achieve electrical interconnection and signal transmission with other peripheral circuits or other elements of the electronic device 100 through the circuit board 150. For example, the fingerprint identification module 140 may receive a control signal from a processing unit of the electronic device 100 through the circuit board 150, and may also output the fingerprint detecting signal from the fingerprint identification module 140 to the processing unit, a control unit or the like of the electronic device 100 through the circuit board 150.

In some embodiments, the fingerprint identification apparatus 140 may be directly fixed and attached to a lower surface of the display screen 120.

However, since the display screen 120 is costly and fragile, the display screen 120 is easily damaged when the fingerprint identification module 140 is directly attached to the display screen 120.

In addition, since the fingerprint identification module 140 and the display screen 120 are completely adhered, if the fingerprint identification module 140 is damaged, the display screen 120 is easily damaged when the fingerprint identification module 140 is disassembled.

Moreover, an attaching process of directly attaching the fingerprint identification module 140 to the display screen 120 is also relatively complicated.

Due to the above problems, costs and complexity of the electronic device 100 are greatly increased, and maintainability is low.

The present application provides a fingerprint identification apparatus, which could reduce the costs and the complexity of the electronic device 100 and improve the maintainability.

In the present application, the fingerprint identification apparatus includes at least one fingerprint sensor chip; and a support plate provided with a first opening window, where the at least one fingerprint sensor chip is fixedly disposed in the first opening window; where the support plate is configured to be mounted to a middle frame of the electronic device such that the at least one fingerprint sensor chip is located under the display screen of the electronic device, the at least one fingerprint sensor chip is configured to receive a fingerprint detecting signal returned by reflection or scattering via a human finger above the display screen, and the fingerprint detecting signal is used to detect fingerprint information of the finger.

The support plate includes a circuit board or a substrate provided with a wiring layer, therefore the at least one fingerprint sensor chip can be connected to the circuit board, or the at least one sensor chip can be connected to an external circuit board through the wiring layer of the substrate, thereby realizing a function of the at least one fingerprint sensor chip.

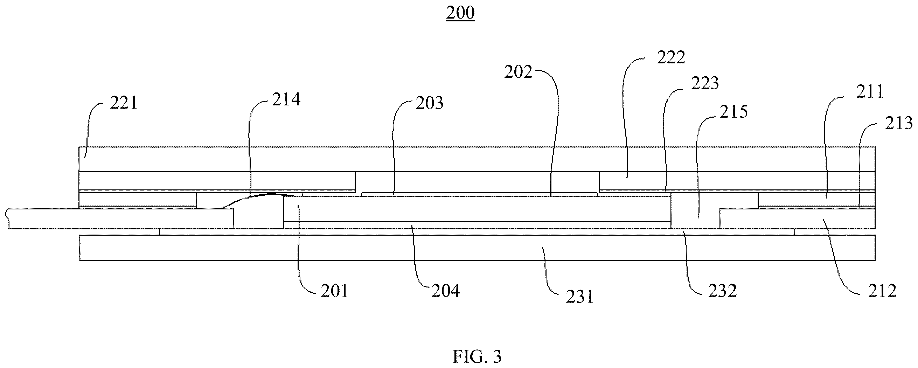

Hereinafter, a fingerprint identification apparatus 200 and an electronic device 300 according to an embodiment of the present application will be described in detail with reference to FIGS. 3 to 9.

It should be noted that, for convenience of description, in the embodiments of the present application, same reference numerals are used to represent same components, and detailed description of the same components is omitted in different embodiments for the sake of brevity.

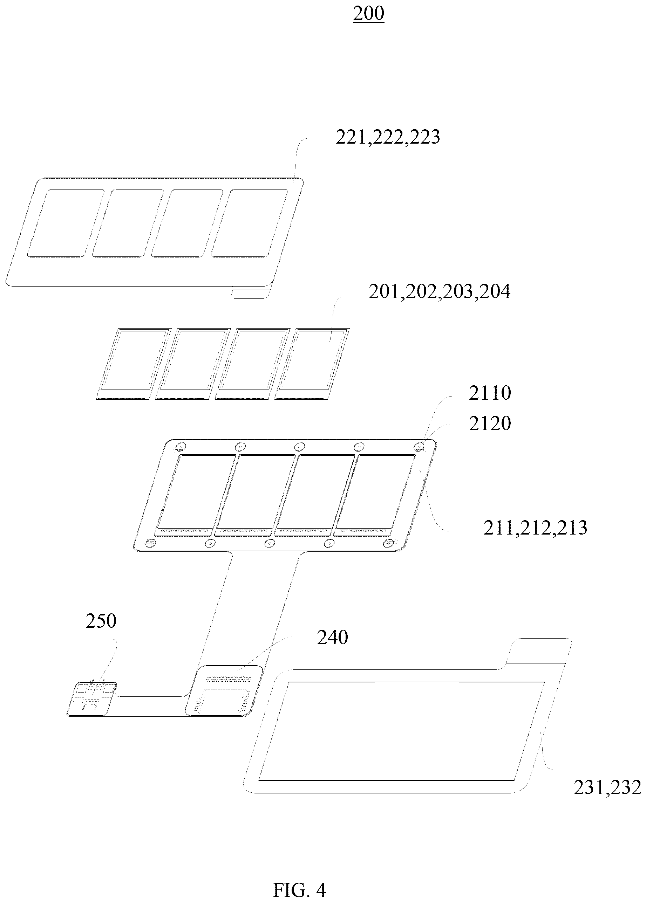

FIGS. 3 and 4 are schematic structural diagrams of a fingerprint identification apparatus according to an embodiment of the present application.

As shown in FIG. 3, a fingerprint identification apparatus 200 includes a fingerprint sensor chip 201, a stiffening plate 211, and a circuit board 212. The circuit board 212 is fixedly disposed under the stiffening plate 211, and the stiffening plate 211 and the circuit board 212 form a supporting plate for supporting the fingerprint sensor chip 201. The stiffening plate 211 is provided with a second opening window, and the circuit board 212 is provided with a third opening window. The second opening window of the stiffening plate 211 and the third opening window of the circuit board 212 form a first opening window of the support plate. The second opening window and the third opening window are not only configured to provide accommodation space for the fingerprint sensor chip 201, but also configured to fix the fingerprint sensor chip 201.

In addition, the fingerprint sensor chip 201 is electrically connected to the circuit board 212, that is, the fingerprint sensor chip 201 may be connected to an external device or component through the circuit board 212.

A lower surface of the stiffening plate 211 and an upper surface of the circuit board 212 are fixedly connected. For example, a first adhesive layer 213 may be provided between the lower surface of the stiffening plate 211 and the upper surface of the circuit board 212 and is configured to fixedly connect the stiffening plate 211 and the circuit board 212. The first adhesive layer 213 may be any solid adhesive or liquid glue having adhesive properties.

The circuit board 212 is configured to be mounted under a display screen of an electronic device such as an upper surface of a middle frame of the electronic device, so that the fingerprint sensor chip 201 is located under the display screen. The fingerprint sensor chip 201 is configured to receive a fingerprint detecting signal returned by reflection or scattering via a human finger above the display screen, and the fingerprint detecting signal is used to detect fingerprint information of the finger. For example, the fingerprint sensor chip 201 may be disposed under a middle region of the display screen of the electronic device through the circuit board 212 so as to conform to a usage habit of a user and facilitate gripping by the user.

The fingerprint sensor chip 201 may include one or more optical fingerprint sensor chips. Each optical fingerprint sensor chip may include one or more optical fingerprint sensors or an array of optical fingerprint sensors.

When the fingerprint sensor chip 201 includes a plurality of optical fingerprint sensor chips, the plurality of optical fingerprint sensor chips may be arranged in the first opening window of the support plate side by side to be spliced into an optical fingerprint sensor chip component.

The stiffening plate 211 includes, but is not limited to, a metal stiffening plate, and a thickness of the stiffening plate 211 may range from 0.075mm to 0.3mm. For example, the metal stiffening plate may be a rigid stiffening plate, and a thickness of the stiffening plate 211 is 0.1mm to control a thickness of the fingerprint identification apparatus 200.

Surface roughness (Ra) of the stiffening plate 211 is greater than a certain threshold such as 0.25µm, to improve the imaging effect. Specifically, when the surface roughness of the stiffening plate 211 is greater than a certain threshold, a surface of the stiffening plate 211 may scatter an optical signal, which could effectively reduce the optical signal that is emitted from the display screen and reflected inside the fingerprint identification apparatus 200, thereby avoiding the influence of light reflection on imaging. In addition, when the surface roughness of the stiffening plate 211 is greater than a certain threshold, reliability of connections between the stiffening plate 211 and other components could be increased. For example, the reliability of the connections between the stiffening plate 211 and the circuit board 211 and the reliability of the connections between the stiffening plate 211 and the sensor chip 201 may be increased.

A color of the stiffening plate 211 may be dark such as black or dark brown, to improve a light absorption effect of the stiffening plate 211, thereby further preventing interference of light reflected upward from the stiffening plate 211 to light received by the fingerprint sensor chip 201.

Referring to FIG. 3 again, a window size of the second opening window of the stiffening plate 211 may be larger than a window size of the third opening window of the circuit board 212 to expose a window position of the third opening window, the window position is provided with a pin of the circuit board, and the pin of the circuit board is connected to the fingerprint sensor chip 201 through a gold wire 214.

The fingerprint sensor chip 201 is fixedly mounted in the second opening window and/or the first opening window through a first fixing adhesive 215. The first fixing adhesive 215 includes, but is not limited to, a thermosetting adhesive. The first fixing adhesive 215 is not only configured to fix the fingerprint sensor chip 201, but also configured to encapsulate the gold wire 214. Optionally, an arc height of the gold wire 214 or an encapsulation height is smaller than the upper surface of the circuit board 212.

In one implementation manner, an arc height or an encapsulation height of the gold wire 214 is less than a certain threshold, for example, the arc height or the encapsulation height of the gold wire is less than 70µm. In another implementation manner, an upper surface of the fingerprint identification chip 201 is lower than an upper surface of the stiffening plate 211, thereby providing mounting space for the gold wire 214 on the fingerprint sensor chip 201.

Referring to FIG. 3 again, a lower surface of the fingerprint sensor chip 201 may also be provided with a coating layer or a film layer 204 having a dielectric constant greater than a preset threshold for protecting the fingerprint sensor chip 201.

Specifically, when the circuit board 212 is mounted to an upper surface of a middle frame of an electronic device, the fingerprint sensor chip 201 may be in direct contact with the upper surface of the middle frame, and further there is a risk of damaging the fingerprint sensor chip 201; the coating layer or the film layer 204 having the dielectric constant greater than the preset threshold is disposed on the lower surface of the fingerprint sensor chip 201, the fingerprint sensor chip 201 can be effectively protected, and even a lower surface of the coating layer or the film layer 204 and a lower surface of the circuit board 212 may be on the same plane, and therefore, when the circuit board 212 is mounted to the upper surface of the middle frame, the coating layer or the film layer 204 may also be fixedly mounted to the upper surface of the middle frame. For example, as shown in FIG. 3, the circuit board 212 and the coating layer or the film layer 204 may be fixedly mounted on the upper surface of the middle frame by a solid adhesive or liquid glue. Optionally, the coating layer or the film layer 204 may be a coating layer or a film layer having a strength greater than a certain threshold.

Referring to FIG. 3 again, an upper surface 202 of the fingerprint sensor chip 201 is a light incident surface of the fingerprint sensor chip 201. An optical path stack layer 203 may be disposed above the upper surface 202. The optical path stack layer 203 includes, but is not limited to, a microlens array including at least one microlens distributed in an array, and the microlens array is disposed above the fingerprint sensor chip 201, and configured to collect a fingerprint detecting signal reflected or scattered via a finger. For example, the microlens array is used for a fingerprint detecting signal whose reflection angle or scattering angle is greater than a certain threshold.

In addition, the fingerprint identification apparatus 200 may further include a filter structure.

In one implementation manner, the filter structure may be a filter, which may be disposed above the upper surface 202 of the fingerprint sensor 201. For example, the filter may be disposed between the upper surface 202 and the optical path stack layer 203, or may be disposed inside or above the optical path stack layer, which is not specifically limited in the present application.

The filter may include one or more optical filters, the one or more optical filters may be configured, for example, as bandpass filters to allow transmission of the light emitted by OLED pixels while shielding other light components such as IR light in the sunlight. This optical filtering could be effective in reducing background light caused by the sunlight when the under-screen fingerprint identification apparatus 200 is used outdoors. The one or more optical filters may be implemented as, for example, optical filter coatings formed on one or more continuous interfaces or one or more discrete interfaces. It should be understood that the filter may be fabricated on a surface of any optical component or along an optical path to the fingerprint sensor chip 201 from reflected light formed by reflection of a finger.

In the embodiment of the present application, the filter is used to reduce undesired ambient light in fingerprint sensing to improve optical sensing of received light by the fingerprint sensor chip 201. The filter may be specifically used to reject light at a specific wavelength, such as near infrared light and partial of red light. For example, a human finger absorbs most of energy of light at a below 580nm, and if one or more optical filters or optical filtering layers are designed to reject light at a wavelength from 580nm to infrared light, undesired contributions to the optical detection in fingerprint sensing from the environment light may be greatly reduced.

In addition, a light incident surface of the filter may be provided with an optical inorganic plating film or an organic blackening coating film such that reflectance of the light incident surface of the filter is lower than a first threshold, for example, 1%, thereby ensuring that the fingerprint sensor chip 201 can receive sufficient optical signals so as to improve a fingerprint identification effect.

In an example that the filter is fixed to an upper surface of the fingerprint sensor chip 201, the filter and the fingerprint sensor chip 201 may be fixed by means of dispensing in a non-photosensitive region of the fingerprint sensor chip 201, and there is a gap between the filter and a photosensitive region of the fingerprint sensor chip 201; or a lower surface of the filter is fixed on the upper surface of the fingerprint sensor chip 201 by glue having a refractive index lower than a preset refractive index. For example, the preset refractive index includes, but is not limited to, 1.3. Alternatively, a periphery of the filter and the circuit board 212 are fixed by means of dispensing.

It should be noted that when the filter is attached to the upper surface of the fingerprint sensor chip 201 by filling of an optical adhesive, once the adhesive covering the upper surface of the fingerprint sensor chip 201 is uneven, a Newton ring phenomenon may occur, thereby affecting a fingerprint identification effect.

In another implementation manner, the filter structure may be a filter coating layer, which may be disposed on the upper surface 202 of the fingerprint sensor chip 201 or on an upper surface of the optical path stack layer 203, which is not specifically limited in the present application. Compared with an implementation manner in which the filter structure is a filter, when the filter structure is a filter coating layer, the filter coating layer can be plated on the upper surface 202 of the fingerprint sensor chip 201 or the upper surface of the optical path stack layer 203 by a coating process, thus avoiding the use of a filter, such as a base material of blue glass or white glass, which may not only avoid the Newton ring phenomenon to improve the fingerprint identification effect, but also effectively reduce a thickness of the fingerprint identification apparatus 200.

Referring to FIG. 3 again, the fingerprint identification apparatus 200 further includes a foam layer 222, which is fixedly disposed on the upper surface of the circuit board 212. For example, the foam layer 222 may be fixedly disposed on the upper surface of the circuit board 212 through a second adhesive layer 223. Optionally, the second adhesive layer 223 is a double-sided adhesive. It should be understood that in other alternative embodiments, the foam layer 222 and the second adhesive layer 223 may be combined into one layer. For example, in a process of manufacturing the foam layer 222, an adhesive layer may be simultaneously formed on a lower surface of the foam layer 222.

Further, when the foam layer 222 is fixed on the upper surface of the circuit board through the double-sided adhesive, the foam layer 222 is also provided with a fourth opening window, and the fourth opening window is aligned with the first opening window. Therefore, an optical signal formed by light emitted by the display screen and reflected or scattered by the finger may be received by the fingerprint sensor chip 201 through the fourth opening window, thereby implementing under-screen fingerprint identification. Further, a window size of the fourth opening window may be smaller than or equal to the window size of the second opening window of the stiffening plate 211. For example, the window size of the fourth opening window may be smaller than the size of the second opening window and greater than or equal to a size of the light incident surface of the fingerprint sensor chip 201 in the second opening window. Therefore, not only under-screen fingerprint identification can be ensured, but also an influence of under-screen fingerprint identification on normal display of the display screen can be avoided.

Referring to FIG. 3 again, the fingerprint identification apparatus 200 may further include a first protective layer 221.

The first protective layer 221 is detachably disposed on an upper surface of the foam layer 222, and is configured to protect the foam layer 222 before the circuit board 212 is mounted to the middle frame. After the circuit board 212 is mounted to the middle frame, the first protective layer 221 may be removed first, and then the middle frame is mounted under the display screen so that the upper surface of the foam layer 222 is in direct contact with a lower surface of a light-emitting layer of the display screen.

The first protective layer 221 may be a heavy release film including, but not limited to, polyethylene glycol terephthalate (PET). As a heavy release PET release film is peelable and has better adhesion compared with a light release PET release film, the foam layer 222 will not fall off during processing and production after the foam layer 222 is attached to the heavy release PET release film, which is convenient for mass production.

Referring to FIG. 3 again, the fingerprint identification apparatus 200 may further include a second protective layer 231.

The second protective layer 231 is detachably disposed on the lower surface of the circuit board 212, and the second protective layer is configured to carry and protect the circuit board 212 before the circuit board 212 is mounted to the middle frame. After the circuit board 212 is mounted to the middle frame, the second protective layer 231 may be removed first, and then the lower surface of the circuit board 212 may be directly and fixedly mounted to the upper surface of the middle frame.

The second protective layer 231 may be fixed to the lower surface of the circuit board 212 through a third adhesive layer 232 (such as a double-sided adhesive). Further, the second protective layer 231 may also be fixed to the lower surface of the coating layer or the film layer 204 through the third adhesive layer 232 to enhance stability, thereby preventing the second protective layer 231 from falling off during processing and production and facilitating mass production. Further, the second protective layer 231 is fixed to the lower surface of the circuit board 212 or the lower surface of the coating layer or the film layer 204 through the third adhesive layer 232 only at a middle position, so that the second protective layer 231 is easily peeled off when the circuit board 212 is mounted to the middle frame.

FIG. 4 is a schematic diagram of a detached component obtained by detaching the fingerprint identification sensor shown in FIG. 3.

As shown in FIG. 4, the stiffening plate 211 may also be provided with at least one through hole 2110 penetrating the stiffening plate in a surrounding region of the second opening window, and the at least one through hole 2110 is configured to expose a positioning identifier on the circuit board, and the positioning identifier is used to position a position of the fingerprint sensor chip 201 in the third opening window. For example, the positioning identifier is a specific pattern or a specific structure on the circuit board 212. In a process of mounting the fingerprint sensor chip 201, the position of the fingerprint sensor chip 201 may be determined through a position of the specific pattern or the specific structure, thereby improving mounting accuracy of the fingerprint sensor chip 201.

Referring to FIG. 4, the fingerprint identification apparatus 200 may further include an image processor 240.

The circuit board 212 is electrically connected to the image processor 240. The image processor 240 may be specifically a micro processing unit (MCU) for receiving a fingerprint detecting signal (such as a fingerprint image) sent from the fingerprint sensor chip 201 through the circuit board 212 and simply processing the fingerprint detecting signal.

For example, the image processor 240 may include at least one capacitor, and the at least one capacitor is disposed on the image processor 240, and is configured to optimize the fingerprint detecting signal captured by the fingerprint sensor chip 201. For example, the at least one capacitor is configured to filter the fingerprint detecting signal captured by the fingerprint sensor chip 201, where the fingerprint sensor chip 201 may correspond to one or more capacitors.

Referring to FIG. 4 again, the fingerprint identification apparatus 200 may further include a connector 250 configured to connect to an external device or other components of the electronic device where the fingerprint identification apparatus 200 is located, so as to further implement communication with the external device or other components of the electronic device. For example, the connector 250 may be configured to connect a processor of the electronic device such that the processor of the electronic device receives a fingerprint detecting signal processed by the image processor 240 and performs fingerprint identification based on the processed fingerprint detecting signal.

It should be understood that FIGS. 3 and 4 are only one examples of the present application and should not be understood as limitation to the embodiment of the present application. For example, in other alternative non-claimed examples, the stiffening plate 211, the first adhesive layer 213, and the circuit board 212 may be replaced with other types of components.

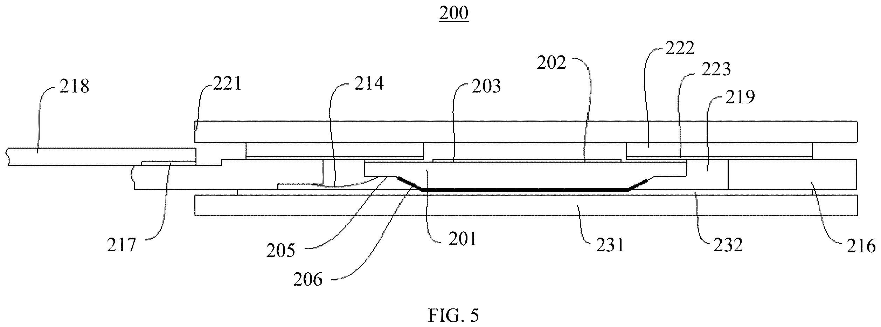

FIG. 5 is another schematic diagram of a fingerprint identification apparatus according to a non-claimed example of the present application.

As shown in FIG. 5, the stiffening plate 211, the first adhesive layer 213, and the circuit board 212 shown in FIG. 4 may be replaced with a substrate 216.

In other words, the substrate 216 may be used as a support plate. The first opening window configured to accommodate and fix the fingerprint sensor chip 201 is disposed on the substrate 216, such that after the substrate 216 is mounted to the middle frame of the electronic device, the fingerprint sensor 201 is located under the display screen of the electronic device, thereby implementing under-screen fingerprint identification.

The fingerprint sensor chip 201 may be fixed in the first opening window through a second fixing adhesive 219. The second fixing adhesive 219 includes, but is not limited to, a plastic sealing adhesive.

A wiring layer may be provided inside the substrate 216, and the fingerprint sensor chip 201 may be connected to the wiring layer through a gold wire 214. Optionally, an arc height or an encapsulation height of the gold wire is less than a certain threshold, for example, the arc height or the encapsulation height of the gold wire may be less than 70µm.

Referring to FIG. 5, the fingerprint identification apparatus 200 may further include a circuit board 218.

The circuit board 218 may be fixedly connected to the substrate 216 through an electroconductive adhesive 217. The electroconductive adhesive 217 may be an adhesive with certain conductivity after curing or drying.

The circuit board 218 may be a circuit board of any component, for example, a circuit board of the display screen or a circuit board of the fingerprint sensor chip 201. For another example, the circuit board 218 may be a circuit board shared by the display screen and the fingerprint sensor chip 201 to simplify a structure of the electronic device.

Referring to FIG. 5 again, the substrate 216 extends upward at a window position of the lower surface of the first opening window to form a first groove, the first groove is configured to expose a wiring layer of the substrate 216, and the fingerprint sensor chip 201 may be electrically connected to the wiring layer of the substrate 216 through the first groove. For example, the exposed wiring layer in the first groove may be provided with a pad or a solder ball for electrical connection to the fingerprint sensor chip 201.

Referring to FIG. 5 again, since the first groove is a groove formed by the substrate 216 extending upward at the window position of the lower surface of the first opening window, a pin of the fingerprint sensor chip 201 is required to be disposed on the lower surface of the fingerprint sensor chip 201 so as to be electrically connected to the substrate 216.

In some embodiments of the present application, the fingerprint sensor chip 201 may be provided with a through silicon via (TSV) and/or a rewiring layer (Redistribution Layer, RDL), and the TSV and/or RDL is configured to guide the pin of the fingerprint sensor chip 201 from an upper surface to a lower surface. The lower surface of the fingerprint sensor chip 201 may be provided with a wiring layer 205 through the TSV and/or RDL. The wiring layer 205 may be electrically connected to the wiring layer in the first groove of the substrate 216 through the gold wire 214.

The fingerprint sensor chip 201 may be further provided with a protective layer 206 on a surface of the wiring layer for protecting and insulating the fingerprint sensor chip 201.

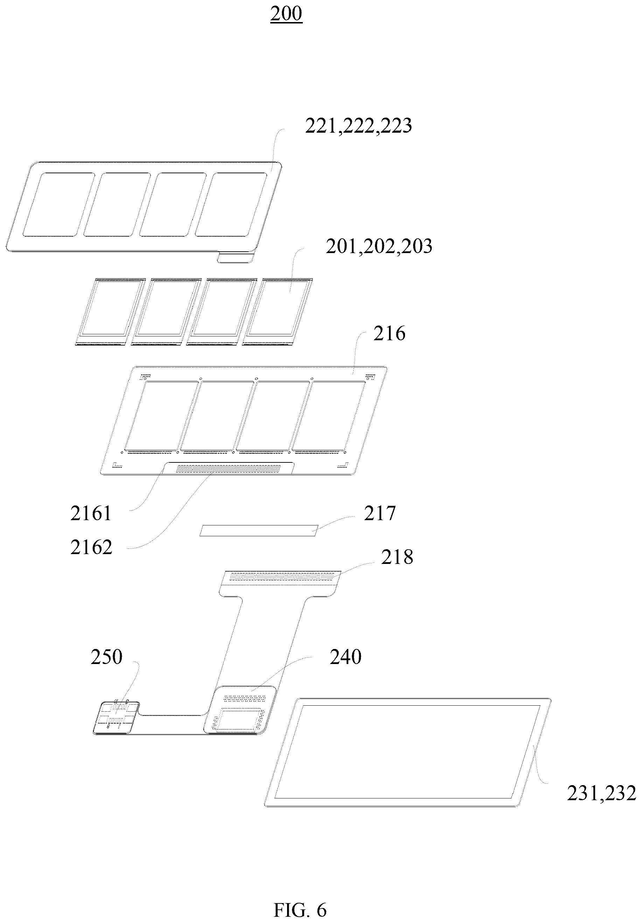

FIG. 6 is a schematic diagram of a detached component obtained by detaching the fingerprint identification sensor shown in FIG. 5.

As shown in FIG. 6, the substrate 216 is provided at an edge position of an upper surface of the substrate 216 with a step 2161 formed by extending downward, and a pin 2162 of the substrate 216 is provided on the step 2161. The pin 2162 of the substrate 216 may be electrically connected to a pin of a circuit board 218 through an electroconductive adhesive 217, thereby implementing communication between the circuit board 218 and the substrate 216.

It should be noted that since an upper surface of the substrate 216 is not shielded by other components before the fingerprint sensor chip 201 is mounted, a positioning identifier of the substrate 216 may be directly used to position a position of the fingerprint sensor chip 201 in the first opening window.

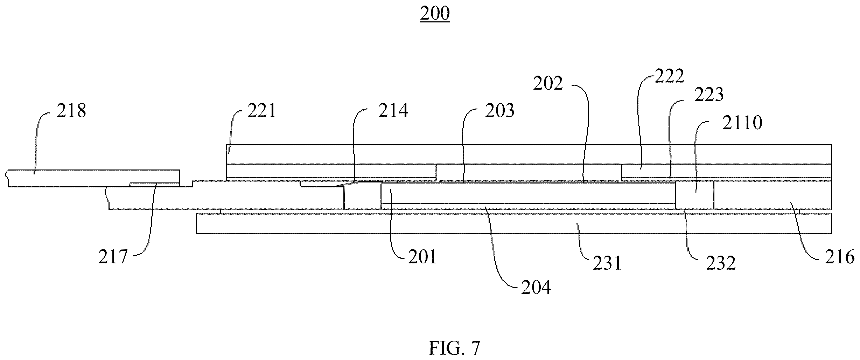

FIG. 7 is another schematic structural diagram of a fingerprint identification apparatus 200 according to a non-claimed example of the present application.

As shown in FIG. 7, the fingerprint identification apparatus may include a substrate 216, and the fingerprint sensor chip 201 may be fixed in the first opening window through a third fixing adhesive 2110. The third fixing adhesive 2110 includes, but is not limited to, a thermosetting adhesive and a plastic sealing adhesive.

The substrate 216 extends downward at a window position on an upper surface of the first opening window to form a second groove, the second groove is configured to expose a wiring layer of the substrate 216, and the fingerprint sensor chip 201 is electrically connected to the wiring layer of the substrate 216. Further, a lower surface of the fingerprint sensor chip 201 is provided with a coating layer or a film layer 204 having a dielectric constant larger than a preset threshold to protect the fingerprint sensor chip 201.

It should also be understood that the forgoing drawings are only examples of the present application and should not be understood as limitation to the present application.

For example, in other alternative non-claimed examples, the fingerprint sensor chip 201 may also be fixed to other components such as a back cover or a battery of an electronic device through the support plate, so that the fingerprint sensor chip 201 is disposed under the display screen of the electronic device.

For example, in the fingerprint identification apparatus 200 shown in FIG. 3, positions of the stiffening plate 211 and the circuit board 212 may be interchanged, that is, the stiffening plate 211 may be fixed under the circuit board through the first adhesive layer 213.

An embodiment of the present application also provides an electronic device having a display screen, and the electronic device may include the fingerprint identification apparatus 200 described above, which may be located under the display screen for performing under-screen fingerprint identification.

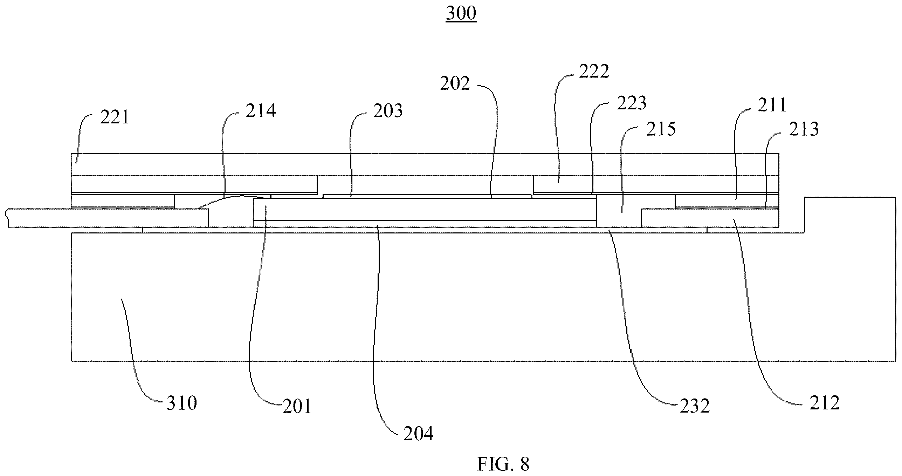

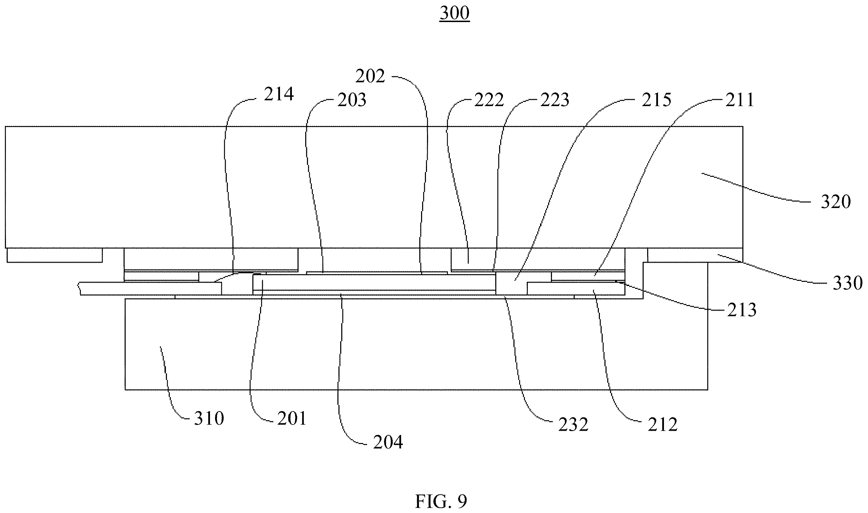

FIGS. 8 and 9 are schematic diagrams of an electronic device 300 including the fingerprint identification apparatus 200 of FIG. 3.

As shown in FIG. 8, the electronic device 300 may include a middle frame 310. The middle frame 310 is configured to support a display screen of the electronic device. An upper surface of the middle frame 310 extends downward to form a third groove, and the third groove is configured to accommodate the fingerprint identification apparatus 200. Specifically, before the fingerprint identification apparatus 200 is mounted to the middle frame 310, a second protective layer 231 of the fingerprint identification apparatus 200 is peeled off so that the circuit board 212 is fixed on an upper surface of the middle frame through the third adhesive layer 232 (such as a double-sided adhesive).

As shown in FIG. 9, the display screen may include a light-emitting layer 320 and a light shielding plate 330.

The light shielding plate 330 is disposed under the light-emitting layer 320 and is provided with an opening window, the fingerprint identification apparatus 200 receives, through the opening window, an optical signal formed by light that is emitted by the light-emitting layer 320 and reflected by a human finger, and the optical signal is used for fingerprint identification.

There is a gap between the fingerprint sensor 201 in the fingerprint identification apparatus 200 and a lower surface of the light-emitting layer 320. The gap may be an air gap that is not filled with any auxiliary material, which could ensure that the fingerprint sensor 201 is not in contact with the lower surface of the display screen when the display screen is pressed or the electronic device is dropped or collided, and stability and performance of fingerprint identification of the fingerprint sensor 201 are not affected.

The light-emitting layer 320 may be a light-emitting layer of the display screen, for example, the light-emitting layer 320 may be an OLED organic light-emitting panel made by using a low temperature poly-silicon (LTPS) technology, the display screen 210 is ultra-thin in thickness, light in weight and low in power consumption and may be used to provide clearer images. When there is a gap between the fingerprint sensor chip 201 and the light emitting layer 320, the gap may be less than or equal to a preset threshold, which includes but is not limited to 600µm.

The light shielding plate 330 may also be used as a screen print layer or an embossed layer, the screen print layer may be provided with patterns and texts, and the patterns and texts may be used as a logo such as a trademark pattern. The light shielding plate 330 may be a black sheet layer or a print layer for shielding light.

The display screen may further include a protective layer for protecting the display screen. Similar to the light shielding plate 330, the protective layer is also provided with an opening window through which the fingerprint identification apparatus 200 receives an optical signal formed by light that is emitted by the light-emitting layer 320 and reflected by a human finger, and the optical signal is used for fingerprint identification. In other embodiments, the protective layer may also be referred to as a cushion layer or a back panel, or the light shielding plate 330 and the protective layer may be combined into one layer.

The protective layer may further include a heat dissipation layer. For example, the protective layer may include the heat dissipation layer that at least a portion thereof is made of a metal material.

It should be understood that the display screen may further include a wiring layer, which may include wiring for electrical connection of the fingerprint sensor chip 201 and/or the display screen. The display screen may further include a polarizer (POL). The polarizer may also be referred to as a polarizing plate, and is configured to generate polarized light. The polarized light is used for optical signal imaging. The display screen may further include cover glass for protecting the display screen. The cover glass and the polarizing plate may be attached by an optically clear adhesive (OCA). The OCA may be a double-sided adhesive tape without a substrate material, which is formed by making an optical acrylic adhesive into a material without a substrate and then bonding a release film on upper bottom and lower bottom layers respectively, that is, the OCA may be a layer of double-sided adhesive tape without a substrate material, which has an optical transparency property.

Taking a display screen being an OLED screen as an example, the display screen may be a flexible screen or a rigid screen, and the display screen may include a stack layer such as a screen print layer, a protective layer, or the like. The OLED screen will leak light downward after drilling holes to the respective layers. When a finger is placed on an illuminated OLED screen, the finger will reflect light emitted by the OLED screen, and the reflected light will penetrate the OLED screen until reaching a region under the OLED screen. A filter structure located under the OLED screen can be used to filter out an infrared signal component in leaked light. Since a fingerprint is a diffuse reflector, an optical signal formed by reflection or diffusion via a finger may exist in all directions. A micro lens array is disposed under the OLED screen and between the fingerprint sensor chips and can collect an optical signal leaked from the OLED screen. Therefore, the fingerprint sensor chip 201 performs imaging of a fingerprint image by receiving an optical signal, in which red light is filtered out.

It should be noted that the optical signal leaking from the OLED screen includes a fingerprint signal and an in-screen structure signal, and the in-screen structural signal may affect the imaging of the fingerprint image, for example, a Moire fringe is generated when the imaging of the fingerprint image is performed. In this embodiment, by controlling a thickness of the foam layer 222 and a thickness of each part, a distance between the fingerprint sensor chip 201 and the OLED screen (for example, the lower surface of the light-emitting layer 320) may be within 600µm such that the imaging of the screen structure is blurred, but imaging of a structure of the fingerprint is not affected. As the distance between the fingerprint sensor chip 201 and the OLED screen is smaller, the fingerprint identification performance is better; therefore, as long as reliability and process capability allow, the distance between the fingerprint sensor chip 201 and the OLED screen may be minimized as much as possible.

It should be understood that specific examples in embodiments of the present application are just for helping those skilled in the art better understand the embodiments of the present application, rather than for limiting the scope of the present application.

It should be understood that terms used in embodiments of the present application and the claims appended hereto are merely for the purpose of describing particular embodiments, and are not intended to limit the embodiments of the present application. For example, the use of a singular form of "a", "the above" and "said" in the embodiment of the present application and the claims appended hereto are also intended to include a plural form, unless otherwise clearly indicated herein by context.

Those of ordinary skill in the art may be aware that, units of the examples described in the embodiments disclosed in this paper may be implemented by electronic hardware, computer software, or a combination of the two. To clearly illustrate interchangeability between the hardware and the software, the foregoing illustration has generally described composition and steps of the examples according to functions. Whether these functions are performed by hardware or software depends on particular applications and designed constraint conditions of the technical solutions. Persons skilled in the art may use different methods to implement the described functions for each particular application, but it should not be considered that the implementation goes beyond the scope of the present application.

In the several embodiments provided in the present application, it should be understood that, the disclosed system and apparatus may be implemented in other manners. For example, the foregoing described apparatus embodiments are merely exemplary. For example, division of the units is merely logical function division and there may be other division manners in practical implementation. For example, multiple units or components may be combined or integrated into another system, or some features may be ignored or not executed. In addition, the displayed or discussed mutual coupling or direct coupling or communication connection may be indirect coupling or communication connection through some interfaces, apparatuses or units, and may also be electrical, mechanical, or connection in other forms.

The units described as separate components may or may not be physically separate, and components displayed as units may or may not be physical units, may be located in one position, or may be distributed on multiple network units. Part of or all of the units here may be selected according to a practical need to achieve the objectives of the solutions of the embodiments of the present application.

In addition, various functional units in the embodiments of the present application may be integrated into a processing unit, or each unit may exist alone physically, or two or more than two units may be integrated into one unit. The integrated unit may be implemented in a form of hardware, or may be implemented in a form of a software functional unit.

If the integrated unit is implemented in the form of the software functional unit and is sold or used as an independent product, it may be stored in a computer readable storage medium. Based on such understanding, the nature of the technical solutions of the present application, or the part contributing to the prior art, or all of or part of the technical solutions may be implemented in a form of software product. The computer software product is stored in a storage medium and includes several instructions for instructing a computer device (which may be a personal computer, a server, or a network device, and the like) to execute all of or part of the steps of the method described in the embodiments of the present application. The storage medium includes: various media that may store program codes, such as a U-disk, a removable hard disk, a read-only memory (ROM), a random access memory (RAM), a magnetic disk, a compact disk, and so on.

## Claims

1. A fingerprint identification apparatus being capable of applying to an electronic device having a display screen (320), wherein the fingerprint identification apparatus comprises:
at least one fingerprint sensor chip (201), wherein an optical path stack layer (203) is disposed above an upper surface of the at least one fingerprint sensor chip (201);
a support plate provided with a first opening window, wherein the at least one fingerprint sensor chip (201) is fixedly disposed in the first opening window through a first fixing adhesive (215); and
a foam layer (222) fixedly disposed on an upper surface of the support plate, wherein the foam layer (222) is provided with a fourth opening window, and the fourth opening window is aligned with the first opening window, and a window size of the fourth opening window is smaller than or equal to a window size of the first opening window;
wherein the support plate is capable of being mounted to a middle frame (310) of the electronic device such that the at least one fingerprint sensor chip (201) is located under the display screen of the electronic device and a gap is provided between the optical path stack layer (203) and the display screen of the electronic device, the at least one fingerprint sensor chip (201) is configured to receive a fingerprint detecting signal returned by reflection or scattering via a human finger above the display screen, and the fingerprint detecting signal is used to detect fingerprint information of the finger; wherein the support plate further comprises:
a stiffening plate (211) provided with a second opening window; and
a circuit board (212) fixedly disposed under the stiffening plate (211) through a first adhesive layer (213) and provided with a third opening window, wherein the first opening window comprises the second opening window and the third opening window, and the at least one fingerprint sensor chip (201) is electrically connected to the circuit board (212) through a gold wire (214), the first fixing adhesive (215) is also configured to encapsulate the gold wire.

2. The fingerprint identification apparatus according to claim 1, wherein a window size of the second opening window is larger than a window size of the third opening window to expose a window position of the third opening window, the opening window position is provided with a pin of the circuit board (212), and the pin of the circuit board (212) is connected to the at least one fingerprint sensor chip (201) through the gold wire (214).

3. The fingerprint identification apparatus according to claim 1 or 2, wherein an encapsulation height of the gold wire (214) is less than 70µm.

4. The fingerprint identification apparatus according to any one of claims 1-3, wherein the stiffening plate (211) is provided with at least one through hole (2110) penetrating the stiffening plate (211) in a surrounding region of the second opening window, the at least one through hole (2110) is configured to expose a positioning identifier on the circuit board (212), and the positioning identifier is used to position a position of the at least one fingerprint sensor chip (201) in the third opening window.

5. The fingerprint identification apparatus according to any one of claims 1-4, wherein a lower surface of the at least one fingerprint sensor chip (201) is provided with a coating layer or a film layer (204) having a dielectric constant greater than a preset threshold.

6. The fingerprint identification apparatus according to any one of claims 1-5, wherein a second adhesive layer (223) is disposed under the foam layer (222), and the foam layer (222) is fixed on the upper surface of the support plate through the second adhesive layer (223).

7. The fingerprint identification apparatus according to any one of claims 1-6, wherein the at least one fingerprint sensor chip (201) comprises a plurality of optical fingerprint sensor chips, and the plurality of optical fingerprint sensor chips are arranged in the first opening window side by side to be spliced into an optical fingerprint sensor chip component.

8. The fingerprint identification apparatus according to any one of claims 1-7, wherein the optical path stack layer (203) comprises:
a microlens array comprising at least one microlens distributed in an array, wherein the microlens array is disposed above the at least one sensor chip and is configured to collect the fingerprint detecting signal.

9. The fingerprint identification apparatus according to claim 8, wherein a filter coating layer is disposed above the microlens array.

10. An electronic device comprising:
a display screen (320); and
the fingerprint identification apparatus (200) according to any one of claims 1-9;
wherein the fingerprint identification apparatus (200) is disposed under the display screen (320) to implement under-screen fingerprint detection.

11. The electronic device according to claim 10, wherein the display screen (320) comprises:
a light-emitting layer; and
a light shielding plate disposed under the light-emitting layer and provided with a fifth opening window, wherein the fingerprint identification apparatus is fixedly mounted on a lower surface of the light-emitting layer through the fifth opening window.

12. The electronic device according to claim 11, wherein a distance between the lower surface of the light-emitting layer and an upper surface of at least one fingerprint sensor chip in the fingerprint identification module is less than 600 µm.

13. The electronic device according to any one of claims 10-12, wherein the electronic device further comprises:
a middle frame (310), wherein an upper surface of the middle frame extends downward to form a third groove, and the third groove is configured to accommodate the fingerprint identification apparatus.

## Patentansprüche

1. Fingerabdruckidentifikationseinrichtung, die dazu fähig ist, an einer Elektronikvorrichtung, welche einen Anzeigebildschirm (320) aufweist, angebracht zu werden, wobei die Fingerabdruckidentifikationseinrichtung Folgendes umfasst:
mindestens einen Fingerabdrucksensor-Chip (201), wobei eine Optischer-Weg-Stapel-Schicht (203) über einer oberen Oberfläche des mindestens einen Fingerabdrucksensor-Chips (201) angeordnet ist;
eine Halteplatte, die mit einem ersten Öffnungsfenster versehen ist, wobei der mindestens eine Fingerabdrucksensor-Chip (201) mittels eines ersten Befestigungsklebstoffs (215) in dem ersten Öffnungsfenster befestigt angeordnet ist; und
eine Schaumschicht (222), an einer oberen Oberfläche der Halteplatte befestigt angeordnet, wobei die Schaumschicht (222) mit einem vierten Öffnungsfenster versehen ist, und wobei das vierte Öffnungsfenster mit dem ersten Öffnungsfenster ausgerichtet ist und eine Fenstergröße des vierten Öffnungsfensters kleiner oder gleich einer Fenstergröße des ersten Öffnungsfensters ist;
wobei die Halteplatte dazu fähig ist, derart an einem Mittelrahmen (310) der Elektronikvorrichtung montiert zu werden, dass sich der mindestens eine Fingerabdrucksensor-Chip (201) unter dem Anzeigebildschirm der Elektronikvorrichtung befindet und ein Spalt zwischen der Optischer-Weg-Stapel-Schicht (203) und dem Anzeigebildschirm der Elektronikvorrichtung ausgebildet wird, wobei der mindestens eine Fingerabdrucksensor-Chip (201) ausgelegt ist zum Empfangen eines Fingerabdruckdetektiersignals, das durch Reflexion oder Streuung mittels eines menschlichen Fingers über dem Anzeigebildschirm zurückgeworfen wurde, und wobei das Fingerabdruckdetektiersignal verwendet wird zum Detektieren von Fingerabdruckinformationen des Fingers; wobei die Halteplatte ferner Folgendes umfasst:
eine Versteifungsplatte (211), die mit einem zweiten Öffnungsfenster versehen ist; und
eine Schaltungsplatine (212), die mittels einer ersten Klebstoffschicht (213) befestigt unter der Versteifungsplatte (211) angeordnet ist und mit einem dritten Öffnungsfenster versehen ist, wobei das erste Öffnungsfenster das zweite Öffnungsfenster und das dritte Öffnungsfenster umfasst und der mindestens eine Fingerabdrucksensor-Chip (201) über einen Golddraht (214) elektrisch mit der Schaltungsplatine (212) verbunden ist, wobei der erste Befestigungsklebstoff (215) auch zum Einkapseln des Golddrahts ausgelegt ist.

2. Fingerabdruckidentifikationseinrichtung nach Anspruch 1, wobei eine Fenstergröße des zweiten Öffnungsfensters größer als eine Fenstergröße des dritten Öffnungsfensters ist, um eine Fensterposition des dritten Öffnungsfensters freizulegen, wobei die Öffnungsfensterposition mit einem Kontakt der Schaltungsplatine (212) versehen ist und der Kontakt der Schaltungsplatine (212) über den Golddraht (214) mit dem mindestens einen Fingerabdrucksensor-Chip (201) verbunden ist.

3. Fingerabdruckidentifikationseinrichtung nach Anspruch 1 oder 2, wobei eine Einkapselungshöhe des Golddrahts (214) weniger als 70 µm beträgt.

4. Fingerabdruckidentifikationseinrichtung nach einem der Ansprüche 1-3, wobei die Versteifungsplatte (211) mit mindestens einem Durchgangsloch (2110) versehen ist, das die Versteifungsplatte (211) in einer Umgebungsregion des zweiten Öffnungsfensters durchsetzt, wobei das mindestens eine Durchgangsloch (2110) ausgelegt ist zum Freilegen einer Positionierungskennung auf der Schaltungsplatine (212), und wobei die Positionierungskennung verwendet wird zum Positionieren einer Position des mindestens einen Fingerabdrucksensor-Chips (201) in dem dritten Öffnungsfenster.

5. Fingerabdruckidentifikationseinrichtung nach einem der Ansprüche 1-4, wobei eine untere Oberfläche des mindestens einen Fingerabdrucksensor-Chips (201) mit einer Beschichtungsschicht oder einer Filmschicht (204) versehen ist, die eine dielektrische Konstante, größer als eine voreingestellte Schwelle, aufweist.

6. Fingerabdruckidentifikationseinrichtung nach einem der Ansprüche 1-5, wobei eine zweite Klebstoffschicht (223) unter der Schaumschicht (222) angeordnet ist und wobei die Schaumschicht (222) mittels der zweiten Klebstoffschicht (223) auf der oberen Oberfläche der Halteplatte befestigt ist.

7. Fingerabdruckidentifikationseinrichtung nach einem der Ansprüche 1-6, wobei der mindestens eine Fingerabdrucksensor-Chip (201) mehrere Optischer-Fingerabdrucksensor-Chips umfasst und wobei die mehreren Optischer-Fingerabdrucksensor-Chips nebeneinander in dem ersten Öffnungsfenster eingerichtet sind, um in eine Optischer-Fingerabdrucksensor-Chipkomponente eingespleißt zu werden.

8. Fingerabdruckidentifikationseinrichtung nach einem der Ansprüche 1-7, wobei die Optischer-Weg-Stapel-Schicht (203) Folgendes umfasst:
ein Mikrolinsenarray, das mindestens eine in einem Array verteilte Mikrolinse umfasst, wobei das Mikrolinsenarray über dem mindestens einen Sensorchip angeordnet ist und ausgelegt ist zum Sammeln des Fingerabdruckdetektiersignals.

9. Fingerabdruckidentifikationseinrichtung nach Anspruch 8, wobei eine Filterbeschichtungsschicht über dem Mikrolinsenarray angeordnet ist.

10. Elektronikvorrichtung, die Folgendes umfasst:
einen Anzeigebildschirm (320); und
die Fingerabdruckidentifikationseinrichtung (200) nach einem der Ansprüche 1-9;
wobei die Fingerabdruckidentifikationseinrichtung (200) unter dem Anzeigebildschirm (320) angeordnet ist, um Unterbildschirm-Fingerabdruckdetektion zu implementieren.

11. Elektronikvorrichtung nach Anspruch 10, wobei der Anzeigebildschirm (320) Folgendes umfasst:
eine Licht emittierende Schicht; und
eine Licht abschirmende Platte, die unter der Licht emittierenden Schicht angeordnet ist und mit einem fünften Öffnungsfenster versehen ist, wobei die Fingerabdruckidentifikationseinrichtung durch das fünfte Öffnungsfenster fest auf einer unteren Oberfläche der Licht emittierenden Schicht montiert ist.

12. Elektronikvorrichtung nach Anspruch 11, wobei eine Distanz zwischen der unteren Oberfläche der Licht emittierenden Schicht und einer oberen Oberfläche des mindestens einen Fingerabdrucksensor-Chips in dem Fingerabdruckidentifikationsmodul kleiner als 600 µm ist.

13. Elektronikvorrichtung nach einem der Ansprüche 10-12, wobei die Elektronikvorrichtung ferner Folgendes umfasst:
einen Mittelrahmen (310), wobei sich eine obere Oberfläche des Mittelrahmens nach unten erstreckt, um einen dritten Einstich auszubilden, und wobei der dritte Einstich ausgelegt ist zum Aufnehmen der Fingerabdruckidentifikationseinrichtung.

## Revendications

1. Appareil d'identification d'empreintes digitales pouvant être appliqué à un dispositif électronique ayant un écran d'affichage (320), l'appareil d'identification d'empreintes digitales comprenant :
au moins une puce de capteur d'empreinte digitale (201), une couche d'empilement de chemin optique (203) étant disposée au-dessus d'une surface supérieure de l'au moins une puce de capteur d'empreinte digitale (201) ;
une plaque de support pourvue d'une première fenêtre d'ouverture, l'au moins une puce de capteur d'empreintes digitales (201) étant disposée de manière fixe dans la première fenêtre d'ouverture au moyen d'un premier adhésif de fixation (215) ; et
une couche de mousse (222) disposée de manière fixe sur une surface supérieure de la plaque de support, la couche de mousse (222) étant pourvue d'une quatrième fenêtre d'ouverture, et la quatrième fenêtre d'ouverture étant alignée avec la première fenêtre d'ouverture, et une taille de fenêtre de la quatrième fenêtre d'ouverture étant inférieure ou égale à une taille de fenêtre de la première fenêtre d'ouverture ;
la plaque de support pouvant être montée sur un cadre central (310) du dispositif électronique de telle sorte que l'au moins une puce de détection d'empreintes digitales (201) est située sous l'écran d'affichage du dispositif électronique et qu'un espace est prévu entre la couche d'empilement de chemins optiques (203) et l'écran d'affichage du dispositif électronique, l'au moins une puce de détection d'empreintes digitales (201) étant configurée pour recevoir un signal de détection d'empreintes digitales renvoyé par réflexion ou diffusion par l'intermédiaire d'un doigt humain au-dessus de l'écran d'affichage, et le signal de détection d'empreintes digitales étant utilisé pour détecter des informations d'empreintes digitales du doigt ; la plaque de support comprenant en outre :
une plaque de raidissement (211) pourvue d'une deuxième fenêtre d'ouverture ; et
une carte de circuit imprimé (212) disposée de manière fixe sous la plaque de raidissement (211) au moyen d'une première couche adhésive (213) et pourvue d'une troisième fenêtre d'ouverture, la première fenêtre d'ouverture comprenant la deuxième fenêtre d'ouverture et la troisième fenêtre d'ouverture, et l'au moins une puce de détection d'empreintes digitales (201) étant connectée électriquement à la carte de circuit imprimé (212) au moyen d'un fil d'or (214), le premier adhésif de fixation (215) étant également configuré pour encapsuler le fil d'or.

2. Appareil d'identification d'empreintes digitales selon la revendication 1, une taille de fenêtre de la deuxième fenêtre d'ouverture étant plus grande qu'une taille de fenêtre de la troisième fenêtre d'ouverture pour exposer une position de fenêtre de la troisième fenêtre d'ouverture, la position de fenêtre d'ouverture étant pourvue d'une broche de la carte de circuit imprimé (212), et la broche de la carte de circuit imprimé (212) étant connectée à l'au moins une puce de capteur d'empreintes digitales (201) au moyen du fil d'or (214).

3. Appareil d'identification d'empreintes digitales selon la revendication 1 ou 2, une hauteur d'encapsulation du fil d'or (214) étant inférieure à 70 µm.

4. Appareil d'identification d'empreintes digitales selon l'une quelconque des revendications 1 à 3, la plaque de raidissement (211) étant pourvue d'au moins un trou traversant (2110) pénétrant la plaque de raidissement (211) dans une région environnante de la deuxième fenêtre d'ouverture, l'au moins un trou traversant (2110) étant configuré pour exposer un identifiant de positionnement sur la carte de circuit imprimé (212), et l'identifiant de positionnement étant utilisé pour positionner une position de l'au moins une puce de détection d'empreintes digitales (201) dans la troisième fenêtre d'ouverture.

5. Appareil d'identification d'empreintes digitales selon l'une quelconque des revendications 1 à 4, une surface inférieure de l'au moins une puce de capteur d'empreintes digitales (201) étant pourvue d'une couche de revêtement ou d'une couche de film (204) ayant une constante diélectrique supérieure à un seuil prédéfini.

6. Appareil d'identification d'empreintes digitales selon l'une quelconque des revendications 1 à 5, une deuxième couche adhésive (223) étant disposée sous la couche de mousse (222), et la couche de mousse (222) étant fixée sur la surface supérieure de la plaque de support au moyen de la deuxième couche adhésive (223).

7. Appareil d'identification d'empreintes digitales selon l'une quelconque des revendications 1 à 6, l'au moins une puce de capteur d'empreintes digitales (201) comprenant une pluralité de puces de capteur d'empreintes digitales optiques, et la pluralité de puces de capteur d'empreintes digitales optiques étant agencées dans la première fenêtre d'ouverture côte à côte pour être épissées en un composant de puce de capteur d'empreintes digitales optiques.

8. Appareil d'identification d'empreintes digitales selon l'une quelconque des revendications 1 à 7, la couche d'empilement de chemins optiques (203) comprenant :
un réseau de microlentilles comprenant au moins une microlentille distribuée dans un réseau, le réseau de microlentilles étant disposé au-dessus de l'au moins une puce de capteur et étant configuré pour collecter le signal de détection d'empreinte digitale.

9. Appareil d'identification d'empreintes digitales selon la revendication 8, une couche de revêtement de filtre étant disposée au-dessus du réseau de microlentilles.

10. Dispositif électronique comprenant :
un écran d'affichage (320) ; et
l'appareil d'identification d'empreintes digitales (200) selon l'une quelconque des revendications 1 à 9 ;
l'appareil d'identification d'empreintes digitales (200) étant disposé sous l'écran d'affichage (320) pour mettre en œuvre une détection d'empreintes digitales sous l'écran.

11. Dispositif électronique selon la revendication 10, l'écran d'affichage (320) comprenant :
une couche émettrice de lumière ; et
une plaque de protection contre la lumière disposée sous la couche émettrice de lumière et pourvue d'une cinquième fenêtre d'ouverture, l'appareil d'identification d'empreintes digitales étant monté de manière fixe sur une surface inférieure de la couche émettrice de lumière à travers la cinquième fenêtre d'ouverture.

12. Dispositif électronique selon la revendication 11, une distance entre la surface inférieure de la couche émettrice de lumière et une surface supérieure d'au moins une puce de capteur d'empreintes digitales dans le module d'identification d'empreintes digitales étant inférieure à 600 µm.

13. Dispositif électronique selon l'une quelconque des revendications 10 à 12, le dispositif électronique comprenant en outre :
un cadre intermédiaire (310), une surface supérieure du cadre intermédiaire s'étendant vers le bas pour former une troisième rainure, et la troisième rainure étant configurée pour recevoir l'appareil d'identification d'empreintes digitales.
